# EUROPEAN PATENT APPLICATION

(11) **EP 1 515 479 A1**
(43) Date of publication of application: **16.03.2005**
(21) Application number: 03723321.0
(22) Date of filing: 12.05.2003
(51) Int. Cl.: H04L 12/28

(54) **DATA TRANSFER METHOD AND DEVICE**

(30) Priority: 31.05.2002 JP 2002159078
(71) Applicant: MATSUSHITA ELECTRIC INDUSTRIAL CO., LTD., Kadoma-shi, Osaka 571-8501 (JP)
(72) Inventor: KOHRI, Toshiyuki, Hirakata-shi, Osaka 573-0075 (JP); UCHIDA, Hirofumi, Neyagawa-shi, Osaka 572-0013 (JP); OHTAKA, Hideki, Hirakata-shi, Osaka 573-0036 (JP); IITSUKA, Hiroyuki, Katano-shi, Osaka 576-0033 (JP); OKAMOTO, Ichirou, Neyagawa-shi, Osaka 572-0081 (JP)
(74) Representative: Eisenführ, Speiser & Partner
(86) International application number: PCT/JP2003/005869
(87) International publication number: WO 2003/103224

(57) **Abstract**

A method and apparatus enable high speed transfer of real-time AV data over a bus. When transmitting real-time data of a specific format using isochronous packets, data indicating the transfer rate is added to the isochronous packet. The playback speed can be changed and playback can be stopped while maintaining the transfer rate. High speed data transmission is thus possible.

## Description

### BACKGROUND OF THE INVENTION

### 1. Field of technology

The present invention relates to a data transmission method and apparatus used for transmitting data requiring real-time processing, such as video signals and audio signals, between multiple devices.

### 2. Description of Related Art

Devices for transmitting video signals and audio signals (referred to together below as "AV data") over a common digital transmission path (a "bus") have been developed as digital transmission technologies have progressed. AV data must be sent and received at the same speed as the data is processed, thus necessitating a real-time bus. "Real-time" means that the video and audio can be transmitted without interruption. An AV data recorder and playback device such as a VCR (also called VTR), for example requires real-time performance to continuously reproduce the video and audio from the recording medium, and to continuously record the video and audio to the recording medium.

One example of a high speed bus enabling real-time transmission of AV data is the IEEE-1394 serial bus. An IEEE-1394 bus can carry different kinds of data, but isochronous communications is specified by the IEEE-1394 standard as the communications means achieving real-time performance in the bus connection. Isochronous communication transmits AV data at a fixed interval by sending/receiving isochronous packets containing multiplexed AV data at a fixed interval of 1 cycle = 125 µsec. A specific method of transmitting AV data using isochronous packets is described below.

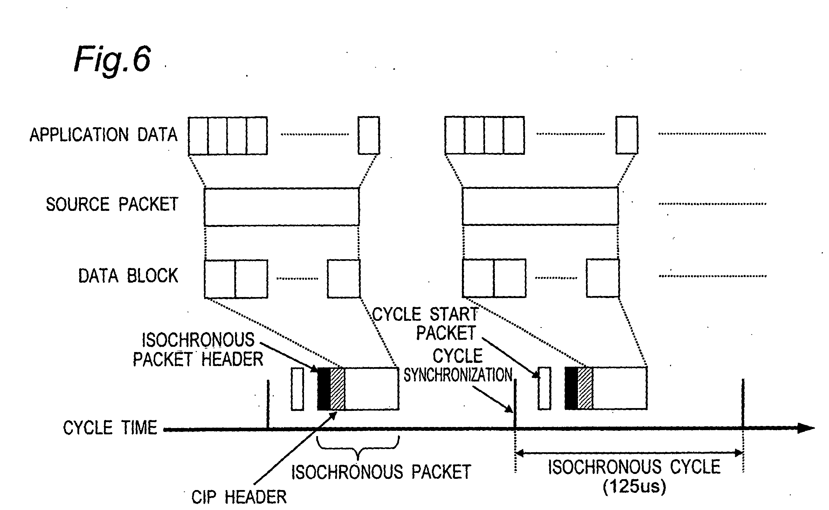

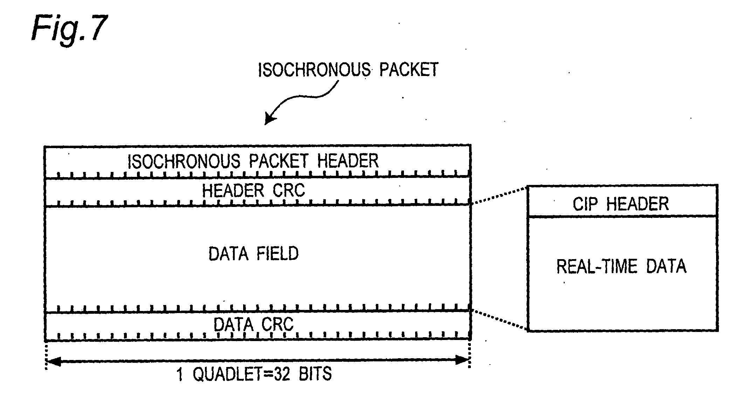

The IEC 61883-1 Digital interface for Consumer Electronic Audio/Video Equipment: General protocol describes a method for real-time communication of AV data using a IEEE-1394 bus. Isochronous packet transmission is shown in Fig. 6. Fig. 7 shows the structure of an isochronous packet transmitted by the method shown in Fig. 6. The communicated data is multiplexed in the data field of each isochronous packet.

The first quadlet (32 bits) of each packet is the packet header. The second quadlet is the header CRC code, and the third quadlet is the data field carrying the actual data. The last quadlet is a CRC code for the data field. The first two quadlets of each data field contain a common isochronous packet header (CIP header) recording the attributes of the data written to the data field. The real-time data in source packets formatted according to the application are then multiplexed to the data field after the CIP header.

Each isochronous cycle starts when the cycle master node sends a cycle start packet. The node storing the data to be sent then sends the data in isochronous packets using a predefined channel number and band. As shown in Fig. 6 and Fig. 7, each isochronous packet contains an isochronous packet header, CIP header, and data. Source packets constructed from the application data are the basic data units multiplexed to an isochronous packet. The source packets are further segmented into a plurality of data blocks as needed, multiplexed to the data field of the isochronous packet, and transmitted.

The DV data format defined in IEC 61883-2 is described below as a specific example of an AV data transmission format using isochronous packets.

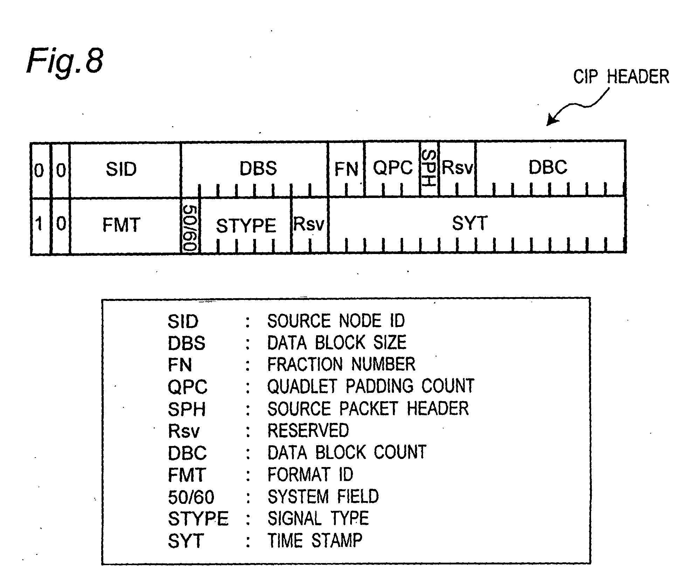

Fig. 8 describes a specific example of the CIP header used to transmit DV format data in isochronous packets. Video data in the DV format is compressed approximately 1/6.4 times per frame, and Digital Interface Blocks (DIF blocks) are constructed from the compressed video data, non-compressed interleaved audio data, and other complementary data. DIF blocks (not shown in detail in the figures) are a transmission unit defined by the DV format, and are 80 bytes long, including 3 bytes of ID data and 77 bytes of data. Because each source packet contains six DIF blocks, when data is transmitted in the DV format, each source packet is 480 bytes. The source packets are multiplexed as data blocks to the data field of the isochronous packet without being segmented. One source packet (= data block) is thus multiplexed and transmitted in one isochronous packet.

More specifically, 1500 DIF blocks per frame or 250 source packets are transmitted in the 525/60 (NTSC) mode. In the 625/50 (PAL) mode, 1800 DIF blocks or 300 source packets are transmitted per frame. Because the number of isochronous packets that can actually be transmitted in one frame is greater than 250 or 300 (depending on the format), each cycle is padded with a number of empty packets, that is, packets having no data field.

Because the source packet size and data block size are the same in DV format data transmissions, further description of the data blocks is omitted below and only source packets are described for brevity.

Note, further that the related prior art is more fully described in the following international protocols:
(1) IEC 61883-1 Digital Interface for Consumer Electronic Audio/Video Equipment: General
(2) IEC 61883-2 Digital Interface for Consumer Electronic Audio/Video Equipment: SD-DVCR Data Transmission.

However, when the IEEE-1394 serial bus is used for isochronous communication between AV devices, the data transmission method of the foregoing prior art only defines a method for transmitting data at normal real-time speed, that is, 1:1 speed. More specifically, the DV format data transmission method as described above enables transmitting one frame of data in one video signal frame period by transmitting one source packet in one isochronous cycle. One application for using the IEEE-1394 bus is therefore to transmit AV data recorded on a VTR camcorder, for example, to a personal computer in a compressed format, thereby eliminating loss of picture quality while keeping the data rate low. More recent technological advances, however, enable raising the data rate of the IEEE-1394 bus, and based on this technical background there is strong demand for shortening the data transmission rate between AV devices.

More specifically, in an editing system that uses the IEEE-1394 bus for data transfers, improvements in the performance of the computers used for editing have shortened the actual editing time to the point where the AV data transfer rate has become a bottleneck. Shortening the AV data transmission time is therefore necessary to further shorten the AV data editing time. This necessitates. a method of transmitting data more quickly than the method of the prior art.

Rather than relying solely on a serial bus, determining how to best 'transfer data at'high speed based on the current operating status of the devices is also needed to achieve high speed data transmission between devices.

### SUMMARY OF THE INVENTION

The present invention is therefore directed to solving the foregoing problems, and an object of the invention is to define an isochronous packet transmission method according to the transmission speed and the playback status of the transmitting side in order to achieve high speed data transmission over a bus.

To achieve the foregoing objects, a data transmission method according to the present invention is a method for transferring AV data of a specific format in isochronous packets from a first node to a second node over a bus. The first node reproduces the AV data at a playback rate M times (where M is a positive integer) the normal playback rate, adds a transfer rate identifier to the isochronous packets where the transfer rate identifier indicates that the transfer rate is M times the normal playback rate, and the isochronous packets are isochronously transmitted from the first node at a transfer rate M times the normal transfer rate.

A data transmission apparatus according to the present invention is an apparatus for transferring AV data of a specific format in isochronous packets from a first node to a second node over a bus. The first node has a means for reproducing the AV data at a playback rate M times (where M is a positive integer) the normal playback speed, a means for adding a transfer rate identifier to the isochronous packets where the transfer rate identifier indicates that the transfer rate is M times the normal transfer rate, and a means for isochronously transmitting the isochronous packets at a transfer rate M times the normal transfer rate.

This method of the present invention defines the isochronous packet transfer format according to the transfer rate and the playback status of the transmission side in order to achieve high speed data transfers over a bus, and can quickly determine the isochronous packet transfer format and the playback status of the transmission-side devices.

Furthermore, the transfer format and the playback operation can be handled separately. As a result, the invention can be easily implemented.

Other objects and attainments together with a fuller understanding of the invention will become apparent and appreciated by referring to the following description and claims taken in conjunction with the accompanying drawings.

### BRIEF DESCRIPTION OF THE DRAWINGS

Fig. 1 is a flow chart showing the procedure for transferring isochronous packets from a VTR to a personal computer according to a preferred embodiment of the present invention;
Fig. 2A to Fig. 2D describe the relationship between data and isochronous packets transmitted in one frame period at a normal 1X transfer rate in a preferred embodiment of the present invention;
Fig. 3 describes the isochronous packet format at a 4X transfer rate in a preferred embodiment of the present invention;
Fig. 4A to Fig. 4D describe the relationship between data and isochronous packets transmitted in one frame period at a 4X transfer rate in a preferred embodiment of the present invention;
Fig. 5 is a block diagram of a specific embodiment for implementing the data transmission method of the present invention;
Fig. 6 describes a method of multiplexing AV data to isochronous packets for transmission;
Fig. 7 shows the structure of an isochronous packet;
Fig. 8 shows the structure of the CIP header when data is transmitted in the DV format;
Fig. 9 describes a method of multiplexing DV format data to isochronous packets for transmission;
Fig. 10 shows the isochronous packet format;
Fig. 11 shows the format of the format identifier FDF;
Fig. 12 is a block diagram showing the connection between a VTR and personal computer;
Fig. 13 is a block diagram showing the connection between a first VTR and a second VTR.
Fig. 14 is a flow chart of the dubbing process.

### DESCRIPTION OF THE PREFERRED EMBODIMENTS

A data transmission method according to the present invention is a method of transmitting isochronous packets containing real-time data in a specific format over a bus. More specifically, the receiving device sets the transmission format used by the transmitting device to send the isochronous packets carrying the real-time data according to the transfer rate. The transmitting device then sends real-time data to the receiving device using an isochronous packet transfer format that is always set according to the transfer rate regardless of the status of data playback from the recording medium. By outputting packets using a packet transfer format that is always set irrespective of the current status of the playback operation of the transmitting device (that is, whether content is being reproduced from the recording medium or whether playback is stopped, for example), the format of the transferred packets does not change frequently according to changes in the playback operation, the processes run on the transmitting and receiving sides can therefore be determined based on the transfer rate, and a process for reserving the bandwidth required for data transmission according to the playback status and releasing unnecessary bandwidth is not needed.

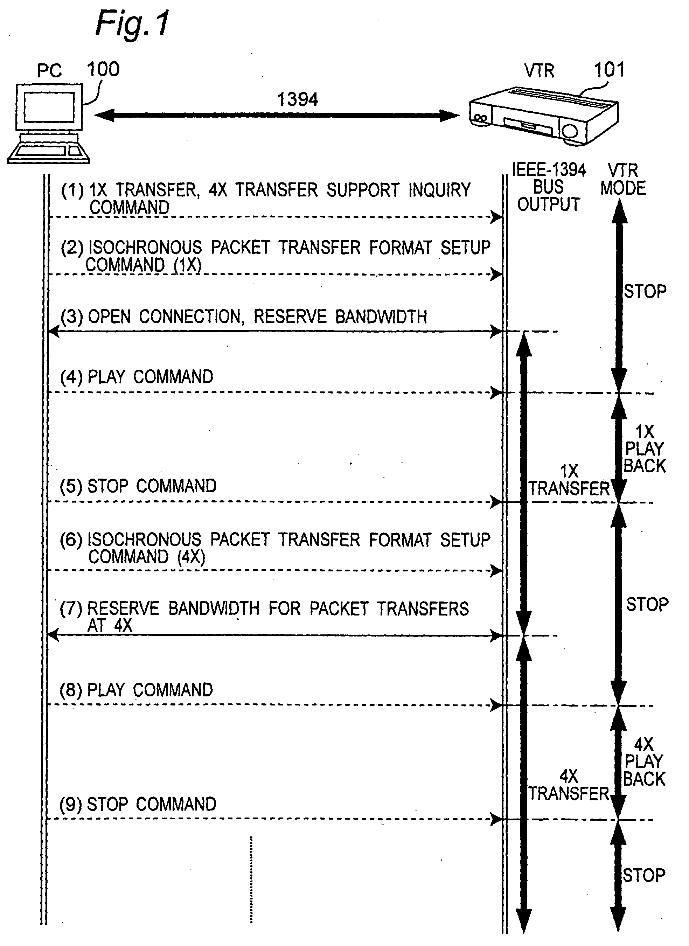

A preferred embodiment according to the present invention is described below with reference to Fig. 1 to Fig. 5.

Fig. 1 shows a data transmission method according to the present invention. In this example a video tape recorder ("VTR" below, also known as VCR) is connected to a personal computer ("PC" below) over an IEEE-1394 bus, and AV data output from the VTR is sent at four times the playback rate to the PC. Broadly defined, the VTR and PC are both communication nodes. Fig. 1 shows the command sequence and the flow of transmission data between a PC 100 and VTR 101 in a preferred implementation of the data transmission method of the present invention.

The IEEE-1394 protocol provides a command (AVC command) for controlling an AV device from a PC or other controller. This command is sent using an asynchronous packet. To transfer playback data from a VTR to a PC, the PC sends an isochronous packet control command and a VTR control command to the VTR, and the VTR sets the operating mode as controlled by the PC or other controller.

A procedure whereby the VTR 101 transfers DV format data at normal playback speed (1X) and at four times the normal playback speed (4X) in response to control commands from the PC 100 is described below.

It will be obvious that negotiation between the devices based on more detailed commands is required, but further description thereof is omitted below. It is further noted that the VTR 101 responds to commands from the PC 100 by returning ACCEPTED and IMPLEMENTED responses.
(1) 1X transfer, 4X transfer support inquiry command
   To confirm whether the VTR 101 supports 1X and 4X transfers, the PC 100 sends a command inquiring whether the VTR 101 supports 1X and 4X transfers.
(2) isochronous packet transfer format setup command (1X)
   The PC 100 sends a command (OUTPUT PLUG SIGNAL FORMAT CONTROL) controlling the transfer format of isochronous packets sent from the VTR 101, and thus sets the isochronous packet transfer format. The VTR 101 is thus set to the 1X mode.
(3) Open connection, reserve bandwidth
   The PC 100 then opens a connection with the VTR 101, and secures bandwidth sufficient for transferring source packets at 1X.
(4) PLAY command (start playback at 1X)
   The PC 100 then sends a PLAY command to the VTR 101. The PLAY command causes the VTR 101 to enter the playback mode, thus starting playback at 1X while simultaneously packetizing the reproduced data for a 1X data transfer format and outputting the packets to the IEEE-1394 bus.
(5) STOP command (stop 1X playback)
   The PC 100 then sends a STOP command to the VTR 101. The STOP command causes the VTR 101 to stop playback at 1X and enter the standby mode.
(6) Isochronous packet transfer format setup command (4X)
   The PC 100 sends a command (OUTPUT PLUG SIGNAL FORMAT CONTROL) controlling the transfer format of isochronous packets sent from the VTR 101, and thus sets the isochronous packet transfer format. The VTR 101 is thus set to the 4X mode.
(7) Reserve bandwidth for packet transfers at 4X
   Because only enough bandwidth to transfer source packets at 1X was previously reserved, bandwidth sufficient to transfer the source packets at 4X must be reserved. The bandwidth can be reserved by either the receiving side (the PC 100 in this example) or the transmission side (the VTR 101 in this example).
(8) PLAY command (start playback at 4X)
   The PC 100 then sends a PLAY command to the VTR 101. Because the isochronous packet format of the IEEE-1394 bus is set to 4X now, the VTR 101 starts playback at 4X while simultaneously packetizing the reproduced data to a 4X data transfer format and outputting the packets to the IEEE-1394 bus.
(9) STOP command (stop 4X playback)

The PC 100 then sends a STOP command to the VTR 101. The STOP command causes the VTR 101 to stop playback at 4X and enter the standby mode.

The format of the isochronous packets output from the VTR 101 in the foregoing process is described more specifically in detail below.

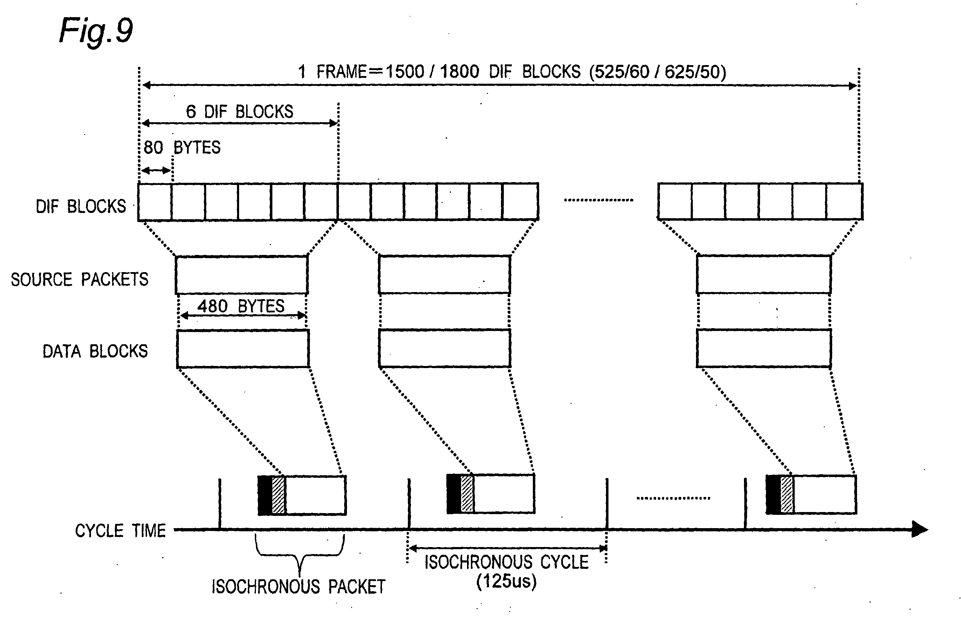

Fig. 9 shows the conventional format for isochronous packet transfer at 1X. Data from one source packet (= data block) is multiplexed to the data field of one isochronous packet.

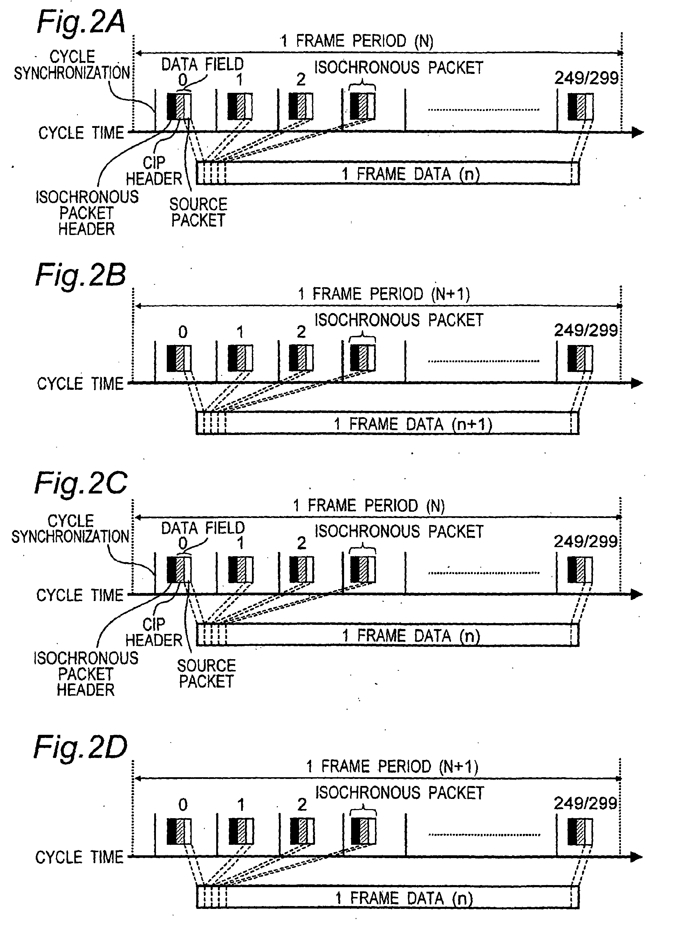

Fig. 2 describes the relationship between the data and isochronous packets transmitted in one frame period. according to the VTR mode in the 1X transmission mode. Fig. 2A and Fig. 2B show the data format in the N-th frame period and the (N+1)-th frame period in the 1X PLAY mode, respectively. Fig. 2C and Fig. 20 show the data format in the N-th frame period and the (N+1)-th frame period, respectively, in the STOP mode following the 1X PLAY mode.

The data in the n-th frame is transmitted in the N-th frame period in the 1X PLAY mode (Fig. 2A), and the data in frame (n+1) is transmitted in the (N+1)-th frame period (Fig. 2B).

The data in the n-th frame is transmitted in the N-th frame period in the STOP mode after the 1X PLAY mode (assuming that the STOP mode was set just before the N-th frame period), and the data in the n-th frame is also transmitted in the (N+1)-th frame period (Fig. 2D). The n-th frame data is thus transmitted repeatedly after the N-th frame period.

As will be known from Fig. 2, when DV format data is transmitted at 1X, one source packet is multiplexed to the data field of one isochronous packet regardless of the playback mode (PLAY or STOP, for example) of the VTR, that is, whether the VTR is operating in the PLAY, STOP, or other mode.

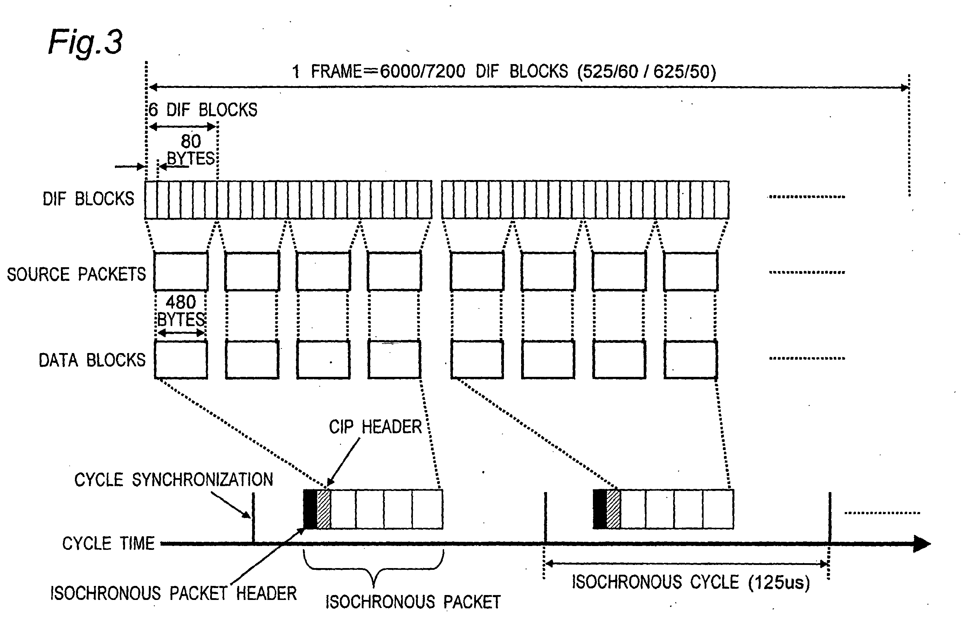

Fig. 3 describes the format of the isochronous packets output to the IEEE-1394 bus when the DV format data is transmitted at 4X. As described above, one source packet is multiplexed to one isochronous packet for 1X data transfers. For 4X data transfers, however, four source packets are multiplexed to one isochronous packet. In the 525/60 mode, therefore, 1000 source packets (= 250 isochronous packets * 4 source packets) are transmitted in one frame period. In the 625/50 mode, therefore, 1200 source packets (= 300 isochronous packets * 4 source packets) are transmitted in one frame period.

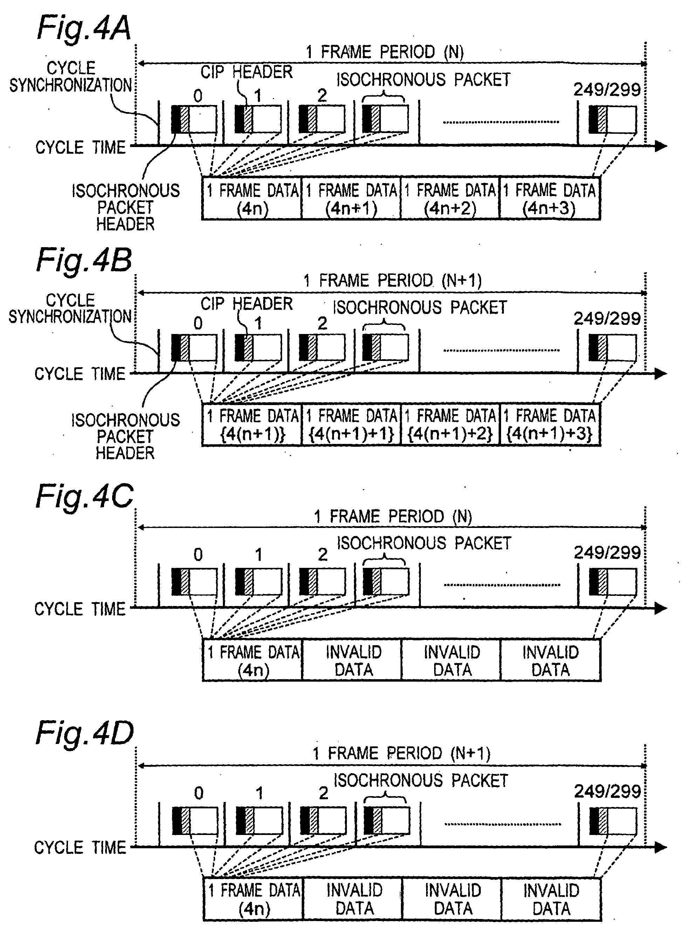

Fig. 4 describes the relationship between the data and isochronous packets transmitted in one frame period according to the VTR mode in the 4X transmission mode. Fig. 4A and Fig. 4B show the data format in the N-th frame period and the (N+1)-th frame period in the 4X PLAY mode, respectively. Fig. 4C and Fig. 4D show the data format in the N-th frame period and the (N+1)-th frame period, respectively, in the STOP mode following the 4X PLAY mode.

In the N-th frame period in the 4X PLAY mode (Fig. 4A), four frames of 'data, that is, frames 4n, (4n+1), (4n+2), and (4n+3) are allocated to the 250 isochronous packets (in the NTSC mode) present in one frame. In the (N+1)-th frame period in the 4X PLAY mode (Fig. 4B), four frames of data, that is, frames 4(n+1), {4(n+1)+1}, {4(n+1)+2}, and {4(n+1)+3} are allocated to the 250 isochronous packets (in the NTSC mode) present in one frame. This enables transferring video at 4X the normal playback speed.

In the first 1/4 of the N-th frame period (Fig. 4C) in the STOP mode after the 4X PLAY mode (assuming the STOP mode was set just before the N-th frame period), the data from frame 4n is transmitted, and null data is transmitted in the remaining 3/4 of the frame period. The data from frame 4n is also transmitted in the first 1/4 of the (N+1)-th frame period (Fig. 4D), and null data is transmitted in the remaining 3/4 of the frame period. The 4n-th frame data is thus transmitted repeatedly in the first 1/4 of each frame period after the N-th frame period.

As shown in Fig. 4, packets are output in the 4X data transfer format from the VTR 101 whether the VTR 101 is in the play or stop mode. More specifically, four source packets are multiplexed to the data field of one isochronous packet. Because four frames of valid data are reproduced in one frame period, multiplexed to isochronous packets and transmitted while the VTR 101 is operating in the 4X playback mode (4X PLAY mode), only valid data is transmitted in the isochronous packets. However, when the VTR 101 stops (enters the STOP mode), only one frame of valid data can be reproduced in one frame period. As a result, valid data is only transmitted in the source packets transmitted in the first 1/4 frame period, and invalid data is transmitted in the remaining 3/4 frame period.

Because the transfer format of the IEEE-1394 bus is also configured to handle data transfers at 4X, The PC 100 receiving the isochronous packets output from the VTR 101 receives source packets containing the content of four frames, and processes all source packets transmitted in one frame period when the VTR 101 is in the PLAY mode. When the VTR 101 enters the STOP mode, the PC 100 processes the source packets carried in the first 1/4 frame period. When the video is decoded and presented on the display while the data is being received, the data in the source packets received in the first 1/4 frame period is decoded and displayed irrespective of the transfer rate. As a result, pictures from four frames are displayed in the 4X PLAY mode, and a still image is correctly displayed when in the STOP mode.

While the operation of the present invention is described above with reference only to the PLAY mode and STOP mode of the VTR, modes other than the PLAY mode, such as slow play and search modes, can be processed in the same way as the STOP mode. In the search mode, for example, the valid data reproduced in the search mode is multiplexed and transmitted to the first 1/4 frame period, and the receiver can display sequential images from the search operation by decoding and displaying the data contained in the source packets received in the first 1/4 frame period. More specifically, during isochronous communication at a transfer rate M-times the normal transfer rate, the transfer rate of the isochronous packets is M-times the normal transfer rate even when the VTR stops playback. Furthermore, during isochronous communication at a transfer rate M-times the normal transfer rate, the transfer rate of the isochronous packets is M-times the normal transfer rate even when the playback rate of the VTR is slower than M-times the normal playback rate.

Methods that can be used for transmitting invalid data include, for example, (1) using empty packets as the isochronous packets and not multiplexing source packets to the data field, (2) repeatedly transmitting the same valid data, and (3) setting the invalid data to a specific value that will cause any problem when decoded (such as video = black, audio = mute). The method that is actually used can be appropriately selected according to the device (node) specifications.

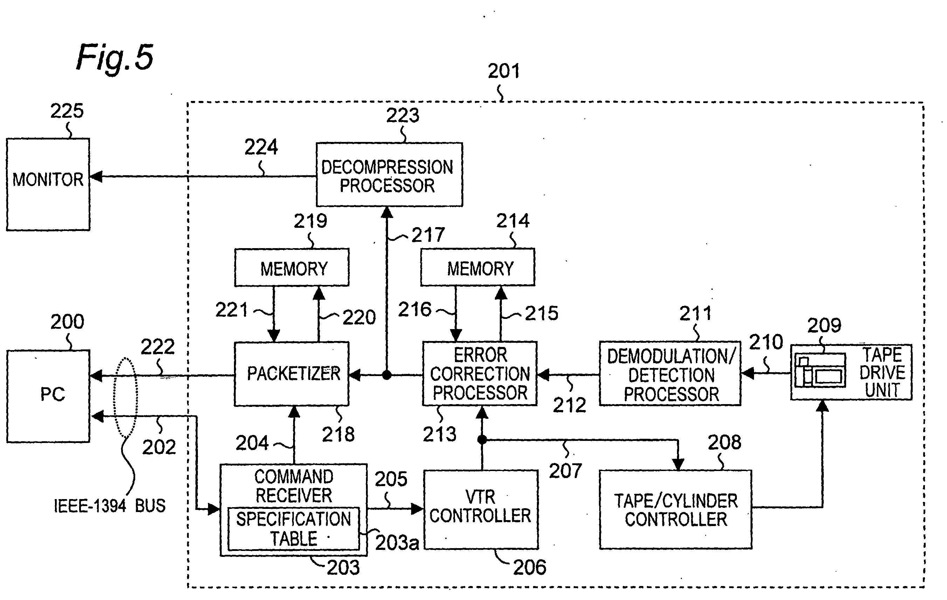

Fig. 5 is a block diagram showing a preferred device for implementing the data transmission method of the present invention. Shown in Fig. 5 are a PC 200, VTR 201, and monitor 225 for displaying a video signal. The VTR 201 has a command receiver 203 for receiving IEEE-1394 protocol commands, a VTR controller 206 for controlling VTR operation, a tape/cylinder controller 208 for controlling the tape transport system and head cylinder, a tape drive unit 209, a demodulation/detection processor 211 for demodulating and detecting isochronous blocks in the playback data 210, an error correction processor 213, memory 214 used in the error correction process, a packetizer 218 for outputting isochronous packets to the IEEE-1394 bus, memory 219 for adjusting the isochronous packet output timing, and a decompression processor 223 for decoding (decompressing) compressed video data.

Also shown in Fig. 5 are the IEEE-1394 bus, a command 202 for controlling the isochronous packet transmission method and VTR 201 operation, a data transmission command 204 controlling data transfers, a VTR control command 205 for controlling VTR operation, a VTR operation control signal 207, the playback data 210 reproduced from the tape drive unit 209, the playback data 212 in the detected isochronous block units, write data 215 for writing to memory 214, read data 216 that is read from memory 214, error-corrected AV data 217, write data 220 for writing to memory 219, read data 221 that is read from memory 219, isochronous packets 222 containing the multiplexed AV data, and the decoded video signal 224.

For simplicity, the commands sent from the PC 200 over the IEEE-1394 bus, and the isochronous packets of the AV data output from the VTR 201, are shown separately in Fig. 5.

Referring to Fig. 5, the PC 200 sends a command 202 to the VTR 201 to control the data transfer format and VTR operation in order to acquire playback data from the VTR 201 over the IEEE-1394 bus. The command 202 sent from the PC 200 is received by the command receiver 203 of the VTR 201. The command receiver 203 also decodes the command 202, returns a specific response to the PC 200, and outputs a VTR control command 205 and a data transmission command 204 controlling isochronous packet transmission.

The command receiver 203 stores a specification table 203a recording the specifications of the VTR 201. These specifications include, for example, whether playback at 1X, 2X, and 4X is possible, the data compression method, and the video format (such as NTSC)). The information written to the format identifier FDF further described below can also be stored in this specification table 203a.

The VTR controller 206 controls the VTR operating mode according to the VTR control command 205.

The PC 200 first sends a command setting the format of isochronous packets transmitted over the IEEE-1394 bus to 4X. The command receiver 203 of the VTR 201 then receives this command, and sets the isochronous packet format in the packetizer 218 by means of data transmission command 204. The packetizer 218 sets format of isochronous packets output to the IEEE-1394 bus to the 4X transfer format shown in Fig. 3.

The PC 200 then sends a PLAY command to the VTR 201 to start playback in the 4X PLAY mode.

The command receiver 203 of the VTR 201 receives this PLAY command, and sends the decoded VTR control command 205 to the VTR controller 206. The VTR controller 206 sends a VTR operation control signal 207 indicating 4X playback to the tape/cylinder controller 208 and error correction processor 213, causing the tape drive unit 209 to operate at 4X speed and causing the error correction processor 213 to operate in the 4X mode.

The playback data 210 reproduced by the tape drive unit 209 is input to the demodulation/detection processor 211 for data demodulation and isochronous block detection. The resulting playback data 212 in isochronous block units is then input to the error correction processor 213.

The error correction processor 213 runs the error correction process using the connected memory 214. Error correction processing using an internal code is first applied to the playback, data 212, and the error correction processed write data 215 is written to memory 214. Because the error correction processor 213 is operating in the 4X mode, four frames of data are processed in one frame period. When playing the four frames ends, the data 216 is read from memory 214, error corrected using an external code, and output as the error-corrected AV data 217.

The error-corrected AV data 217 is then input to the packetizer 218. The packetizer 218 builds the source packets from error-corrected AV data 217, and buffers the data to memory 219. Because isochronous packets are transmitted at fixed 125 µsec periods on an IEEE-1394 bus, the data transmission period does not always match the timing of error-corrected AV data 217 output from the error correction processor 213. The memory 219 is therefore used to adjust for this timing difference. Source packet data is read from the memory 219 every 125 µsec, multiplexed to the data field of the isochronous packets and output to the IEEE-1394 bus. The error-corrected AV data 217 reproduced from the VTR 201 is multiplexed and output to the IEEE-1394 bus, and is simultaneously decoded by the decompression processor 223 to the original video signal 224 and displayed on the monitor 225 to monitor the playback status.

The PC 200 receives the isochronous. packets output to the IEEE-1394 bus and captures the original AV data by extracting the multiplexed source packet data and reconstructing the original AV data. When the data capture process ends, the PC 200 sends a STOP command to stop the playback process of the VTR 201.

The command receiver 203 of the VTR 201 processes and passes the STOP command to the VTR controller 206. The VTR controller 206 instructs the tape/cylinder controller 207 to slow the cylinder speed and stop tape travel, and resets the error correction processor 213 to the normal 1X processing mode. When tape travel stops, data from the same tape position is repeatedly input to the error correction processor 213. The content of the memory 214 is therefore not updated, and the valid data from the one frame that was just stored is repeatedly output from the error correction processor 213 as the error-corrected AV data 217.

Because the PC 200 has not applied a different data transmission command to the VTR 201, the packetizer 218 continues to output isochronous packets in the same 4X transmission mode regardless of the playback mode of the VTR. However, because the error correction processor 213 only outputs one frame of valid AV data 217 in one frame period (that is, operates in the 1X mode), the packetizer 218 outputs the one frame of valid AV data 217 to the isochronous packet contained in the first 1/4 frame period, and outputs invalid data to the isochronous packets contained in the other 3/4 frame period.

As will be obvious from the foregoing description, the VTR 201 shown in Fig. 5 has a playback portion including the VTR controller 206, tape/cylinder controller 208, tape drive unit 209, demodulation/detection processor 211, and error correction processor 213, and a transmission portion including the packetizer 218. To output AV data in the 4X mode, the playback portion is set to a 4X playback mode, and the transmission portion is set to a 4X transfer rate. While the VTR enters the stop mode when AV data transmission ends, the playback portion enters the stop mode in this embodiment of the invention but the transmission portion continues operating at the 4X transfer rate.

When data is transferred at high speed between a PC and a VTR in this embodiment of the invention, the PC first issues a command setting the data transfer packet format of the IEEE-1394 bus used as the VTR output channel to the high speed transmission mode, and then controls VTR operation using VTR control commands. Regardless of the VTR operating mode, that is whether the VTR is in the playback, stop, or search mode, for example, the format of isochronous packets output from the VTR to the IEEE-1394 bus can always be set to a specific format according to the data transfer rate. Processing the isochronous packets on the sending and receiving sides can therefore be determined according to the transfer rate, and the packet format does not change frequently according to the mode being used to reproduce data from the recording medium. In addition, a process for reserving the bandwidth needed for data transmission and releasing unnecessary bandwidth according to the operating state of the VTR is unnecessary. As a result, the method of the invention can be easily implemented.

More specifically, once the transfer rate has been set, the method of the present invention enables the VTR to continue operating at the same data transfer rate in the play, stop, slow, or search mode, for example, and the transfer rate does not need to be changed according to the operating mode.

The present invention is described above using data transmission between a VTR and PC by way of example, but the invention shall not be so limited. For example, the playback device outputting the AV data shall not be limited to a VTR, and the invention can be used with recording and reproducing apparatus using other types of recording media, including optical discs, hard disks, and semiconductor memory. Furthermore, the means (bus) for transmitting data shall not be limited to an IEEE-1394 serial bus, and any transmission method that uses isochronous communication can be used.

The data transmission method of the present invention as described above sets the transfer format of packets sent from the transmitting device according to the data transfer rate, and the transmitting device always outputs packets using the transfer format specified for the packets regardless of what playback mode the transmitting device is using. As a result, the packet format does not change when the playback mode changes, and processing on the transmitting device and receiving device sides is always set based on the transfer rate. In addition, a process for reserving the bandwidth needed for data transmission and releasing unnecessary bandwidth according to the operating state of the VTR is unnecessary. As a result, the method of the invention can be easily implemented.

It will be obvious that while the invention has been described using 1X and 4X transfer rates by way of example, the invention can be implemented at other data transfer rates, including 2X or other M-times the normal transfer rate (where M is a positive integer).

Communicating the transfer rate information from the PC to the VTR, or conversely from the VTR to the PC, is described next.

The data transmission method of the present invention is a method for transmitting AV data in a specified format over a bus from a first node to a second node using isochronous packets. The first node reproduces AV data at M-times the normal playback rate (where M is a positive integer), adds a transfer rate identifier indicating that the transfer rate is M-times the normal playback rate to the isochronous packet, and sends the isochronous packet by isochronous communication at M-times the normal playback rate. The receiving device detects the transfer rate identifier multiplexed to the received isochronous packet, and thereby determines that the received isochronous packet was sent at what multiple of the normal transfer rate.

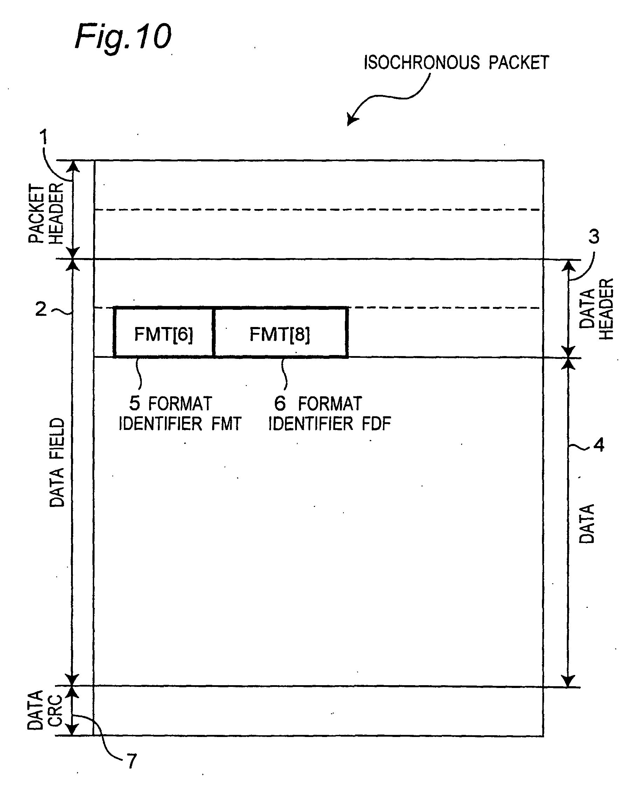

Fig. 10 shows the format of isochronous packets transmitted by isochronous communication mode where the isochronous packets are as shown in Fig. 7.

Referring to Fig. 10, the packet header 1 is defined by the IEEE-1394 protocol, and contains such information as the channel number and how much data is carried in the data field 2 of the packet. The data field 2 stores the user data being transmitted, and includes a data header 3 containing information such as the type of data in the packet, and the'actual data 4 being transmitted. The data header 3 more specifically includes a format identifier FMT 5 declaring the transmission signal format, format identifier FDF 6, and other header data. The numbers in parentheses in format identifier FMT 5 and format identifier FDF 6 in Fig. 10 indicate the bit size. Format identifier FMT 5 is thus 6 bits, and format identifier FDF 6 is 8 bits. The data CRC 7 is used for detecting transmission errors in the 2.

Real-time data such as AV data is transmitted by the IEEE-1394 protocol. The sending node that transmits the isochronous packet therefore writes a format identifier for the transmitted signal to the data header 3 according to the format shown in Fig. 10, and transmits the isochronous packets.

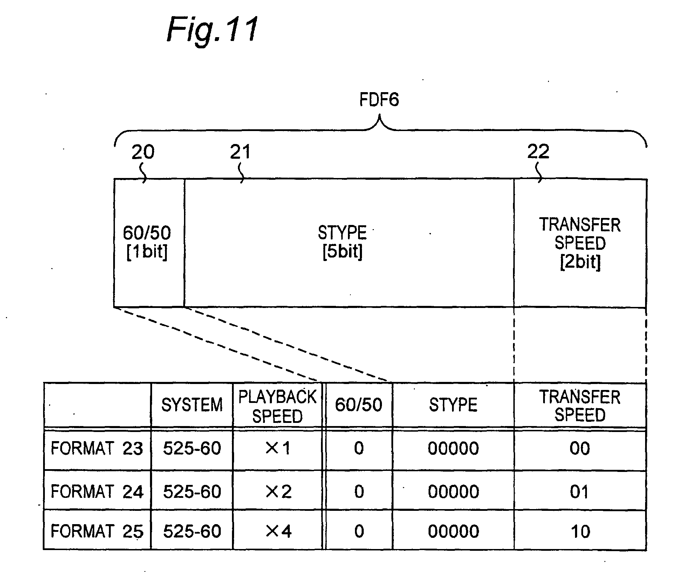

Fig. 11 shows the content of the format identifier FDF 6.

In Fig. 11 the 60/50 field 20 is a 1-bit system identifier indicating whether a 525-60 (NTSC) system or 626-50 (PAL) system. The 60/50 field 20 is set to 0 for a 525-60 (NTSC) system, and to 1 for a 626-50 (PAL) system.

The STYPE field 21 is a 5-bit compression type identifier identifying the type of compression coding used for the transmitted data. If SD-DV compression is used, the STYPE field 21 is set to 00000.

The transfer speed field 22 is a 2-bit transfer rate identifier indicating the rate of the transmitted signal relative to the normal transfer rate of the signal format. If the transfer rate is the normal transfer rate (1X), the transfer speed field 22 is set to 00, to 01 if 2X, and to 10 if 4X. More generally, if the transfer rate is M-times the normal transfer rate, the transfer speed identifier is set to a value indicating M. This reduces the required bit size of the identifier. If the transfer rate is M-times the normal transfer rate, the playback speed is M-times the normal playback speed or slower.

The normal transfer rate is the speed at which one frame of AV data is transmitted in one frame period of the AV data.

The normal playback speed is the speed at which one frame of AV data is reproduced in one frame period of the AV data.

The normal recording speed is the speed at which one frame of AV data is recorded in one frame period of the AV data.

The format identifier FDF thus includes a system type identifier, compression method identifier, and transfer speed identifier. Other identifiers could also be included. The transfer speed field 22 could be written to the 2-bit reserved field Rsv shown in Fig. 8, for example.

The table at the bottom in Fig. 11 shows three possible formats.

Format 23 indicates the 525-60 NTSC system with the playback speed on the transmitting device side set to the normal speed (1X). As a result, the 60/50 field 20 is 0, the STYPE field 21 is 00000, and the transfer speed field 22 is 00.

Format 24 indicates the 525-60 NTSC system with the playback speed on the transmitting device side set to twice the normal speed (2X). As a result, the 60/50 field 20 is 0, the STYPE field 21 is 00000, and the transfer speed field 22 is 01.

Format 25 indicates the 525-60 NTSC system with the playback speed on the transmitting device side set to four times the normal speed (4X). As a result, the 60/50 field 20 is 0, the STYPE field 21 is 00000, and the transfer speed field 22 is 10.

The format of the transmitted signal can thus be known by reading the system type and transfer rate in the format identifier FDF 6.

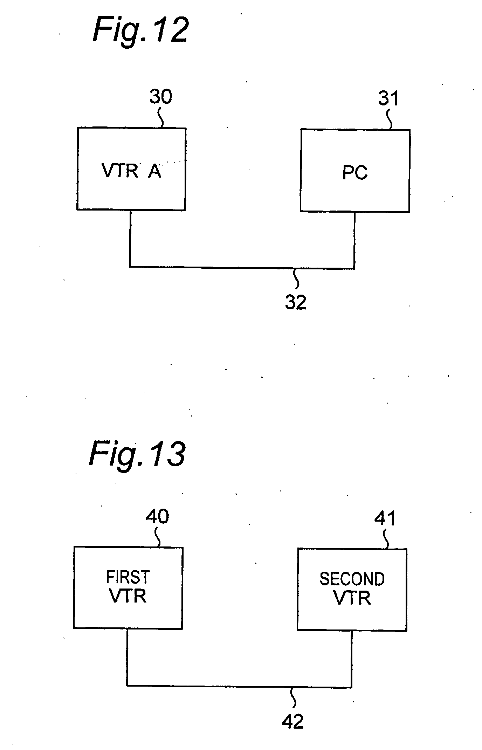

Fig. 12 shows a bus connection between one VTR and one PC whereby AV data is transmitted from the VTR to the PC and captured by the PC. VTR A 30 is the transmitting device that transmits data reproduced from a video tape. The PC 31 captures the signal reproduced by the VTR A 30. A cable 32 interconnects the VTR A 30 and PC 31.

In this example the VTR A 30 plays the tape at 2X, and transmits the AV data from a 525-60 (NTSC) system in 2X format in isochronous packets by isochronous communication. The PC 31 receives real-time data from the VTR A 30 via the cable 32, which is a IEEE-1394 bus, detects the format identifier FDF 6 in the isochronous packets, and thus detects the transfer format of the received signal. The PC 31 decodes the format identifier FDF 6 to detect the 2X format of the 525-60 (NTSC) system, and decodes the data according to this format.

With this embodiment of the invention the PC detects the format identifier of the data transmitted from a connected device, determines the compression method, transfer rate, and other information about the transmitted signal from the format identifier, and can thus process the received signal accordingly. As a result, the PC can display the received video on a display, or convert the format for recording to a hard disk, for example.

An example of two VTRs connected by an IEEE-1394 bus for dubbing AV data at 2X is described next.

Fig. 13 shows two VTRs, first VTR 40 and second VTR 41, connected by a bus for dubbing AV data.

In Fig. 13 first VTR 40 plays the original tape being dubbed, and second VTR 41 records the signal reproduced by the first VTR 40. First VTR 40 and second VTR 41 are connected by a cable 42. The first VTR 40 plays the source tape being dubbed at 2X and transfers the signal as real-time data over the cable 42 to the second VTR 41. The second VTR 41 detects the format identifier FDF 6 in the received isochronous packets, detects the transfer format, and records the signal according to the transfer format.

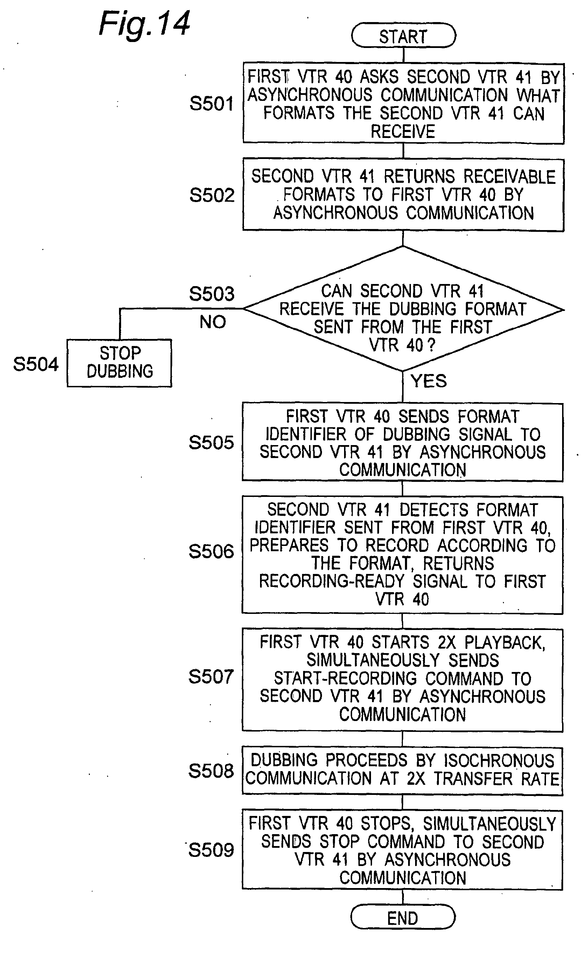

Fig. 14 is a flow chart showing a process for confirming the format of the signal being dubbed by asynchronous communication between the first VTR 40 and second VTR 41 when 525-60 (NTSC) system signal data is dubbed at 2X from the first VTR 40 to the second VTR 41.

The first VTR 40 can play a tape at a playback speed selected from among multiple playback speeds, such as 1X and 2X. The second VTR 41 can record a signal to tape at a recording speed selected from among multiple recording speeds, such as 1X, and 2X. Because playing and recording the tape at 1X is the normal speed, the VTRs preferably always have this capability. Both the first VTR 40 and second VTR 41 also store the specification table 203a described above.

It is assumed here that the operator has input information to the first VTR 40 selecting the 2X dubbing mode.

The first VTR 40 therefore plays the tape at twice the normal playback speed, and the second VTR 41 records the received signal at twice the normal recording speed, thereby dubbing the tape.

Starting in step S501, the first VTR 40 sends a query by asynchronous communication to the second VTR 41 to determine what formats can be received by the second VTR 41 and thus determine if the second VTR 41 can receive the 2X playback format of the first VTR 40.

In response, the second VTR 41 returns to the first VTR 40 by asynchronous communication the formats that the second VTR 41 can receive (step S502). More specifically, the first VTR 40 asks if data can be transmitted to the second VTR 41 at M-times the normal transfer rate, such as 2X. The transfer rate corresponds to the playback speed. The second VTR 41 then references the specification table 203a, and because in this example the second VTR 41 can handle data at the 2X playback speed, returns a message indicating that 2X playback (recording) is possible. The specification table 203a in this case includes information indicating that queries can be received by asynchronous communication.

The first VTR 40 then determines if the format of the signal to be dubbed to the second VTR 41 can be received by the second VTR 41 (S503). If the second VTR 41 can receive the format, the first VTR 40 sends the dubbing format identifier to the second VTR 41 (S505). If the second VTR 41 cannot receive that format, the first VTR 40 interrupts the dubbing process (S504).

If a signal in the 525-60 system is to be dubbed at 2X to the second VTR 41, the first VTR 40 sets the 60/50 field 20 in the format identifier FDF 6 to 0, the STYPE field 21 to 00000, and the transfer speed field 22 to 01 as shown in format 24 in Fig. 11, and sends the format identifier FDF 6 to the second VTR 41. The format identifier FDF 6 is configured by referencing the specification table 203a, for example.

When the second VTR 41 receives the format identifier FDF 6 from the first VTR 40, the second VTR 41 detects the format identifier FDF 6, prepares for recording an NTSC (525-60) format signal at 2X, and then informs the first VTR 40 that recording can begin (S506).

When the first VTR 40 receives the recording-ready signal from the second VTR 41, the first VTR 40 starts playback at 2X and simultaneously asynchronously sends a recording command to the second VTR 41 (S507).

The first VTR 40 packetizes the playback signal to isochronous packets, writes the format identifier FDF 6 to a specific part of the data header 3 in the isochronous packets, and transmits the isochronous packets. Dubbing by isochronous communication at a 2X transfer rate thus continues (S508).

When the first VTR 40 has played the tape to the end of the content to be dubbed, the first VTR 40 stops and sends a STOP command by asynchronous communication to the second VTR 41 (S509). This ends the process of dubbing content at 2X from a first VTR 40 to a second VTR 41.

As shown in Fig. 13 and Fig. 14, the method of the present invention enables a first VTR 40 that is the source drive from which content is to be dubbed to confirm the device specifications (functionality) of the second VTR 41 that is to record the dubbed content to a different recording medium before dubbing begins. Dubbing can thus proceed using a format matching the capabilities of both devices. It will also be obvious that the dubbing device (second VTR 41) could query the source device (first VTR 40 in this example) to determine and set the dubbing conditions.

The present invention has been described using a video tape recorder (VTR) by way of example, but the invention shall obviously not be so limited. More specifically, the invention could be applied to other devices capable of reproducing and recording data to other types of recording medium, including DVD and other types of optical discs, hard disks, and semiconductor memory.

The digital transfer path (bus) shall also not be limited to an IEEE-1394 serial bus.

By adding a transfer rate identifier to the isochronous packets for transmission when transmitting real-time data in isochronous packets at a desired transfer rate, the data transmission method of the present invention enables a receiving device receiving the isochronous packets to determine the transfer rate by reading the transfer rate identifier contained in a received isochronous packet. Furthermore, by detecting the transfer rate, the receiving device can decode the AV data transmitted and received at a transfer rate other than the normal transmission speed using a desired format.

More specifically, by adding a transfer rate identifier, real-time data can be transmitted at a desired transmission speed, which is particularly useful for high speed dubbing applications, for example.

Furthermore, by writing the transfer rate identifier indicating the transfer rate in the data header at the beginning of the data transmission block, the transfer rate can be specified or queried using an asynchronous communication control command. The transfer rate can thus be set in the connected devices and the transfer rate can be set according to the specifications of the connected devices before real-time data transfer begins. This is also particularly useful for high speed dubbing applications, for example.

Furthermore, when the PC, VTR, or other nodes are connected or disconnected, or the power supply of a node is disconnected, the method of the invention enables quickly resetting the bus and implementing a so-called hot-swap or plug-and-play system. Real-time data communication (isochronous communication) and control command communication (asynchronous communication) can thus be achieved using an IEEE-1394 bus.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A data transmission method for transmitting AV data in a specific format using isochronous packets over a bus from a first node to a second node, said method comprising:
reproducing AV data in said first node at a playback speed that is M-times a normal playback speed (where M is a positive integer);
adding in said first node a transfer rate identifier, indicating that the transfer rate is M-times a normal transmission speed, to the isochronous packet; and
isochronously communicating from said first node the isochronous packets at a transfer rate that is M-times the normal transmission speed.

2. A data transmission method as described in claim 1, wherein the isochronous packets comprise at least a packet header and a data transfer block, and
the transfer rate identifier indicating the transfer rate is added to the data header,
the data header being located before the data transfer block.

3. A data transmission method as described in claim 1, wherein the normal playback speed is the speed at which one frame of AV data is reproduced in one frame period of the AV data, and
the normal transfer rate is the speed at which one frame of AV data is transmitted in one frame period of the AV data.

4. A data transmission method as described in claim 1, wherein the first node queries the second node by asynchronous communication whether the second node can receive data at M-times the normal transmission speed before sending the AV data.

5. A data transmission method as described in claim 1, wherein the second node records at a recording speed that is M-times a normal recording speed.

6. A data transmission method as described in claim 1, wherein when playback stops during isochronous communication at a transfer rate that is M-times the normal transmission speed, the first node continues isochronous communication of isochronous packets at a transfer rate that is M-times the normal transmission speed.

7. A data transmission method as described in claim 1, wherein when playback occurs at a playback speed that is slower then M-times the normal playback speed during isochronous communication at a transfer rate that is M-times the normal transmission speed, the first node continues isochronous communication of isochronous packets at a transfer rate that is M-times the normal transmission speed.

8. An apparatus for transmitting AV data in a specific format using isochronous packets over a bus from a first node to a second node, wherein the first node comprises:
a means for reproducing AV data at a playback. speed that is M-times a normal playback speed (where M is a positive integer);
a means for adding to the isochronous packet a transfer rate identifier indicating that the transfer rate is M-times a normal transmission speed; and
a means for isochronously communicating the isochronous packets at a transfer rate that is M-times the normal transmission speed.

9. A data transmission apparatus as described in claim 8, wherein the isochronous packets comprise at least a packet header and a data transfer block, and
the transfer rate identifier indicating the transfer rate is added to the data header,
the data header being located before the data transfer block.

10. A data transmission apparatus as described in claim 8, wherein the normal playback speed is the speed at which one frame of AV data is reproduced in one frame period of the AV data, and
the normal transfer rate is the speed at which one frame of AV data is transmitted in one frame period of the AV data.

11. A data transmission apparatus as described in claim 8, wherein the first node further comprises a means for querying the second node by asynchronous communication whether the second node can receive data at M-times the normal transmission speed before sending the AV data.

12. A data transmission apparatus as described in claim 8, wherein the second node comprises a recording means for recording at a recording speed that is M-times a normal recording speed.

13. A data transmission apparatus as described in claim 8, wherein the first node further comprises a control means for continuing isochronous communication of isochronous packets at a transfer rate that is M-times the normal transmission speed when playback stops during isochronous communication at a transfer rate that is M-times the normal transmission speed.

14. A data transmission apparatus as described in claim 8, wherein the first node further comprises a control means for continuing isochronous communication of isochronous packets at a transfer rate that is M-times the normal transmission speed when playback occurs at a playback speed that is slower then M-times the normal playback speed during isochronous communication at a transfer rate that is M-times the normal transmission speed.
